# EUROPÄISCHE PATENTANMELDUNG

(11) **EP 1 516 524 A1**
(43) Veröffentlichungstag der Anmeldung: **23.03.2005**
(21) Anmeldenummer: 04104381.1
(22) Anmeldetag: 10.09.2004
(51) Int. Cl.: A01F 7/06, A01F 12/18, A01F 12/54

(54) **Mähdrescher mit einer Kanaleinrichtung zur pneumatischen Reinigung einer Axialtrenneinrichtung**

(30) Priorität: 17.09.2003 US 664243
(71) Anmelder: DEERE & COMPANY, Moline, Illinois 61265-8098 (US)
(72) Erfinder: Lovett, Benjamin Max, Port Byron, IL 61275 (US); Römmler-Walz, Walter, 66292, Riegelsberg (DE); Gölzer, Michael, 66482, Zweibrücken (DE); Ochssner, Dieter, 66497, Contwig (DE); Shannon, Robert Vincent Jr., Bettendorf, IA 52722 (US)
(74) Vertreter: Holst, Sönke, Dr.

(57) **Zusammenfassung**

Die Erfindung betrifft einen Mähdrescher (10) mit einer Trenneinrichtung (24) für Erntegut, einem Ventilator und einer Kanaleinrichtung (100), die angeordnet ist, einen vom Ventilator erzeugten Luftstrom zur Oberseite der Trenneinrichtung (24) zu leiten, um Verunreinigungen von ihr fortzublasen, wobei die Kanaleinrichtung (100) eine Leitung (74) umfasst, die einen Einlass (60), der eingerichtet ist, sich im Wesentlichen horizontal bewegende Luft vom Ventilator aufzunehmen, und einen Auslass (62) aufweist, aus dem Luft im Wesentlichen vertikal nach unten ausströmen kann.

Es wird vorgeschlagen, dass sich innerhalb der Leitung (74) eine Tragfläche (102) quer erstreckt, die zur Verbesserung des Luftflusses nach unten zum Auslass (62) und zur Vermeidung einer Rückverwirbelung der Luft zum Einlass (60) hin angeordnet ist.

## Beschreibung

Die Erfindung betrifft einen Mähdrescher mit einer Trenneinrichtung für Erntegut, einem Ventilator und einer Kanaleinrichtung, die angeordnet ist, einen vom Ventilator erzeugten Luftstrom zur Oberseite der Trenneinrichtung zu leiten, um Verunreinigungen von ihr fortzublasen, wobei die Kanaleinrichtung eine Leitung umfasst, die einen Einlass, der eingerichtet ist, sich im Wesentlichen horizontal bewegende Luft vom Ventilator aufzunehmen, und einen Auslass aufweist, aus dem Luft im Wesentlichen vertikal nach unten ausströmen kann.

Beim Dreschen geernteten Guts wird das Korn vom Stroh und der Spreu getrennt und in einem Sammelbehälter abgelegt. Bei konventionellen Mähdreschern wird das geerntete Gut einer quer angebrachten Dreschtrommel und einem Dreschkorb zugeführt, wo das Gut gedroschen wird, sodass das Korn vom Stroh getrennt wird. Die Reste werden dann einer Leittrommel zugeführt, die auch das Korn vom Stroh trennt. Die Strohreste werden dann über oszillierende, mit Öffnungen versehene Strohschüttler geführt, die das Stroh an der Rückseite des Mähdreschers auswerfen, während sie es noch im Stroh vorhandenem Korn ermöglichen, durch die Öffnungen zu fallen. Korn und Spreu, die durch den Dreschkorb und die Strohschüttler hindurch nach unten fallen, werden einer Siebeinrichtung zugeführt, um die Spreu vom Korn zu trennen. Ein Gebläsezusammenbau wird bei diesem letzten Schritt verwendet, um die leichtere Spreu vom schwereren Korn fortzublasen. Bei einem Axialmähdrescher wird das Korn einem zylindrischen Rohr zugeführt, das einen Rotor enthält. Das geerntete Gut wir im zylindrischen Rohr gedroschen und getrennt, wobei das Korn und die Spreu auf ähnliche Weise wie beim konventionellen Mähdrescher daraus herausfallen.

Eine Hybridmaschine mit einer quer angeordneten Dreschtrommel und einem Paar axialer Trenneinheiten ist in der US 4 739 773 A offenbart, deren Offenbarung durch Verweis hierin mit aufgenommen wird. Die axialen Trenneinheiten umfassen zylindrische Rohre, in denen Rotoren aufgenommen sind. Es wurde herausgefunden, dass sich Staub, Spreu und andere Verunreinigungen auf den Oberseiten der axialen Trenneinrichtungen ansammeln. Es ist bekannt, einen Luftkanal bereitzustellen, der mit einem Luftstrom von einem Ventilator eines Kühlsystems beaufschlagt wird, um Verunreinigungen vom oberen Bereich einer axialen Trenneinheit fortzublasen. Beispiele sind in der US 5 088 960 A und US 6 468 153 B offenbart.

Es wäre daher ein Kanal wünschenswert, der einen Luftrom mit hinreichendem Volumen und Geschwindigkeit bereitstellt, um effektiv Verunreinigungen von dieser Fläche fort zu blasen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung bezieht sich auf die Verwendung von Kühlluft insbesondere für den Motor, um pneumatisch Staub, Spreu und andere Verunreinigungen von der Oberseite einer Trenneinrichtung und den Antriebseinrichtungen ihres Rotors zu blasen. Eine Kanaleinrichtung leitet Kühlluft vom Kühlsystem des Motors zur Oberseite der Axialtrenneinrichtung und der Rotorantriebseinrichtungen. Ein oberhalb der Trenneinrichtung angeordneter Deflektor teilt den Luftstrom in eine nach vorn und eine nach hinten gerichtete Komponente auf. Es wird vorgeschlagen, eine Tragfläche bzw. einen tragflächenartig geformten Körper nahe des Einlasses einer Leitung der Kanaleinrichtung anzuordnen, um die Führung der Luft in Richtung auf den Auslass zu erleichtern und zu verhindern, dass Luft wieder zurück zum Einlass rezirkuliert.

Auf diese Weise wird der Fluss durch die Leitung verbessert.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers mit einer quer angeordneten Dreschtrommel und einer Axialtrenneinheit,
- Fig. 2: eine halbschematische Draufsicht auf den Mähdrescher,
- Fig. 3: eine Seitenansicht einer im Stand der Technik bekannten Kanaleinrichtung,
- Fig. 4: eine Vorderansicht der bekannten Kanaleinrichtung,
- Fig. 5: eine Seitenansicht einer erfindungsgemäßen Kanaleinrichtung, und
- Fig. 6: eine Vorderansicht einer erfindungsgemäßen Kanaleinrichtung.

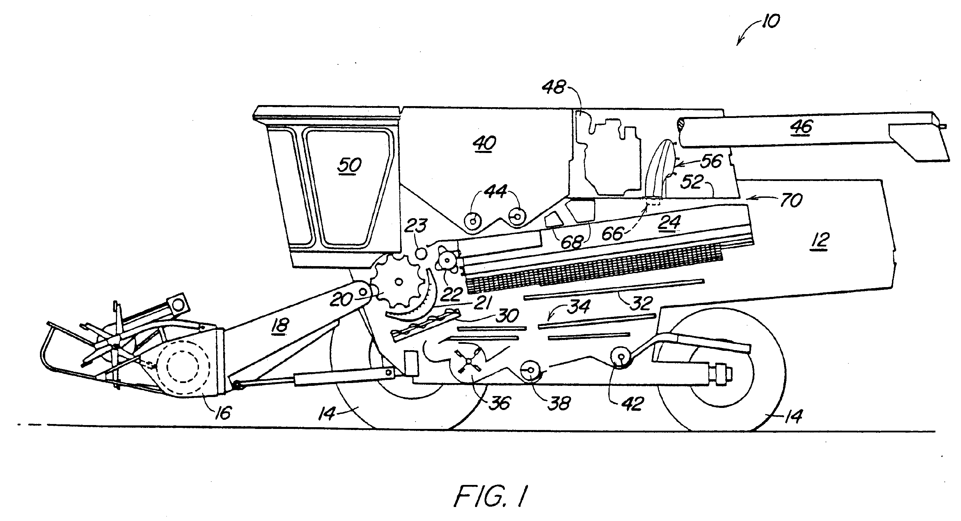

Die Figur 1 illustriert einen selbstfahrenden Mähdrescher 10 mit einer tragenden Struktur 12. Die tragende Struktur 12 wird durch Räder 14 umfassende, im Eingriff mit dem Boden stehende Einrichtungen abgestützt und vorangetrieben. Die im Eingriff mit dem Boden stehenden Räder 14 werden durch Vortriebsmittel angetrieben, die einen Motor 48 zum Vortreiben des Mähdreschers 10 über ein Feld umfassen. Obwohl der Mähdrescher 10 in der dargestellten Ausführungsform mit Rädern 14 dargestellt ist, könnten auch Raupen- oder Gummibandlaufwerke allein oder in Kombination mit Rädern 14 verwendet werden, um den Mähdrescher 10 voranzutreiben.

Der vordere Teil des Mähdreschers 10 ist mit einem Schneidwerk 16 ausgestattet, um auf einem Feld stehendes Gut zu ernten und das geerntete Gut durch einen Schrägförderer 18 nach oben zu fördern und dem Dresch- und Trennmechanismus zuzuführen. Der Dresch- und Trennmechanismus umfasst eine quer angeordnete Dreschtrommel 20 und einen zugehörigen Dreschkorb 21, dem das geerntete Gut zuerst zugeführt wird. Das gedroschene Gut wird dann einer Abstreifwalze 23 und einer Leittrommel 22 zugeführt, von der es in die Axialtrenneinrichtung 24 eintritt.

Eine ähnliche Axialtrenneinrichtung 24 ist in der US 4 884 994 offenbart, die durch Verweis hier mit aufgenommen wird. Eine derartige Axialtrenneinrichtung umfasst ein Paar seitlich nebeneinander angeordneter Rohre. Jedes Rohr ist mit einem Rotor ausgestattet, der feste Finger oder Zinken aufweist. Gedroschenes Gut von der Leittrommel 22 wird von oben in die Rohre geleitet, wo es in den Eingriff der Rotoren kommt. Die obere Innenseite jedes Rohrs ist mit Kufen ausgestattet, um das Erntegut nach hinten zu fördern, wobei die Rotorzinken das Gut nach oben werfen, um es mit den Kufen in Eingriff zu bringen. Die Unterseite jedes der Rohre ist mit Rosten versehen, durch die Korn und Spreu auf den Vorbereitungsboden 32 fallen. Strohreste werden an der Rückseite der Rohre ausgeworfen.

Korn und Spreu, die aus den Dresch- und Trenneinrichtungen herausfallen, fallen auf einen Schneckenförderer 30 und den Vorbereitungsboden 32, die das Korn und die Spreu zum Siebkasten 34 fördern. Der Siebkasten 34 ist mit einem Gebläsezusammenbau 36 ausgestattet, um die Trennung des Korns von der Spreu zu unterstützen. Sauberes Korn wird von einem quer angeordneten Schneckenförderer 38 einem (nicht gezeigten) Elevator zugeführt, der das Korn in einen Korntank 40 fördert. Ein quer angeordneter Überkehrschneckenförderer 42 leitet nicht ausgedroschene Ähren über einen anderen (nicht gezeigten) Elevator zurück zur Drescheinrichtung. Sauberes Korn wird aus dem Korntank 40 über ein Entladesystem entladen, das quer angeordnete Schneckenförderer 44 und einen Entladeschneckenförderer 46 umfasst.

Alle verschiedenen Systeme werden durch einen Verbrennungsmotor 48 mit innerer Verbrennung angetrieben, der durch den Bediener in der Bedienerkabine 50 gesteuert wird. Die Drescheinrichtungen, Trenneinrichtungen und Reinigungseinrichtungen sind innerhalb der Seitenwände der tragenden Struktur 12 angeordnet.

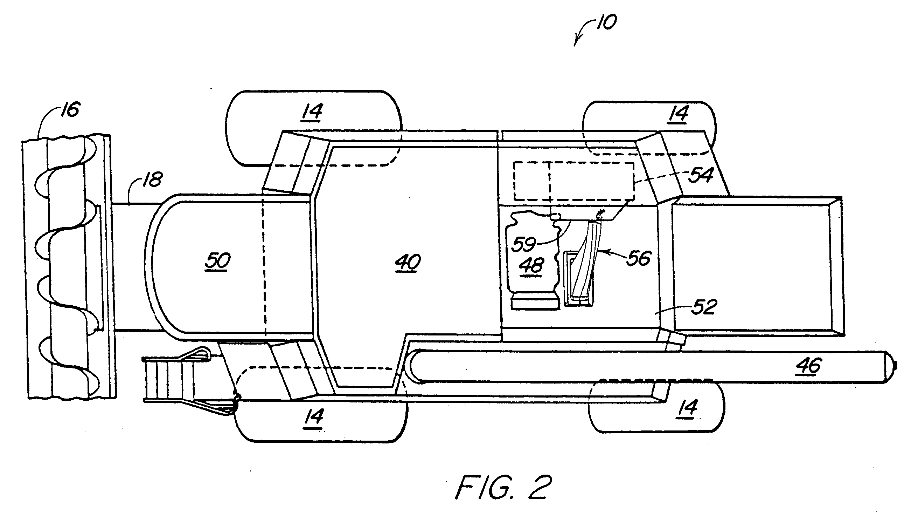

Wie in Figur 2 dargestellt, ist der Motor 48 auf einer Arbeitsplattform 52 angeordnet, die sich auf der Rückseite des Korntanks 40 befindet. Die Arbeitsplattform 52 wird verwendet, um den Motor 48 zu warten. Das Kühlsystem des Motors 48 umfasst einen Kühlventilator, einen Radiator, einen Ladeluftkühler, Ölkühler, Betriebsstoffkühler, Kondensoren und ein bei 54 angeordnetes, selbstreinigendes rotierendes Sieb. Ein derartiges Kühlsystem ist in der US 4 906 262 A offenbart, die durch Verweis hier mit aufgenommen wird.

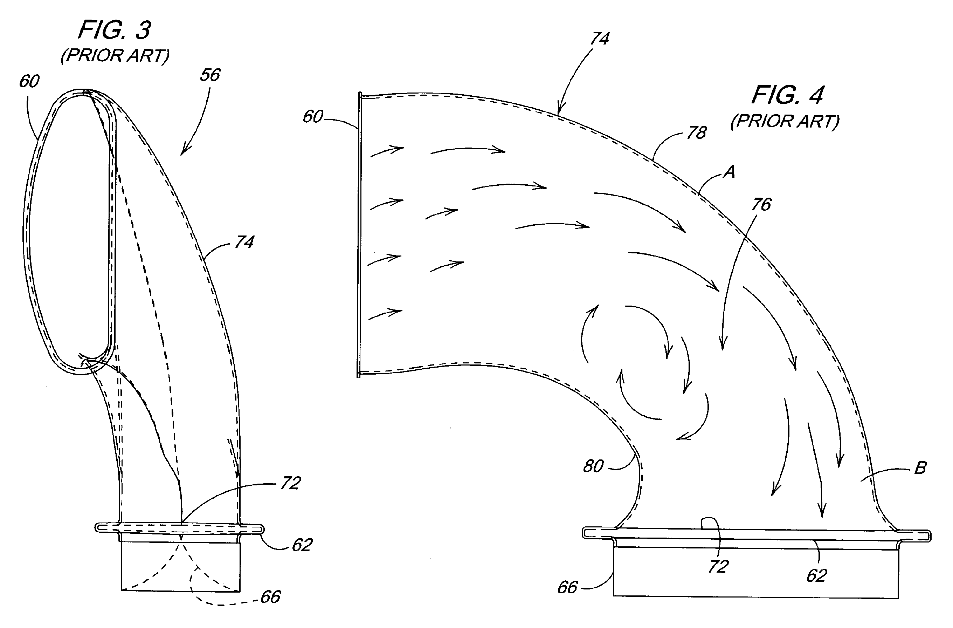

Eine Kanaleinrichtung 56 zur Aufnahme eines Teils des Kühlluftstroms ist hinter dem Motor 48 und pneumatisch stromab des Kühlventilators des Motors 48 angeordnet. Eine im Stand der Technik verwendete Kanaleinrichtung 56 ist am besten in den Figuren 3 und 4 illustriert. Wenn vom Kühlventilator Kühlluft durch die Wärmetauscher und das rotierende Sieb gezogen wird, bildet sie einen quer verlaufenden, horizontalen Luftstrom. Der größte Teil dieses horizontalen Luftstroms wird dem Motor 48 durch ein Leitblech 59 zugeführt, jedoch fängt ein Einlass 60 der Kanaleinrichtung 56 einen Teil dieses Luftstroms ab. Die Struktur der Kanaleinrichtung 56 ändert die Richtung des Luftstroms, so dass er vertikal nach unten in Richtung auf die Axialtrenneinrichtung 24 zu fließt.

Die Luft wird von der Kanaleinrichtung 56 durch den Auslass 62 ausgestoßen, der mit einer in der Arbeitsplattform 54 angeordneten Öffnung ausgerichtet ist. Wenn der nunmehr vertikal nach unten gerichtete Luftstrom durch den Auslass 62 geleitet wird, stößt er auf den Deflektor 66. Der Deflektor 66 teilt den Luftstrom in zwei Komponenten, eine nach vorn gerichtete Komponente und eine nach hinten gerichtete Komponente. Der Deflektor 66 ändert die Richtung des Luftstroms von einem vertikal nach unten gerichteten Luftstrom in einen im Wesentlichen horizontalen Luftstrom, der nach vorn und nach hinten gerichtete Komponenten aufweist, die dazu dienen, Verunreinigungen von der Oberseite der Axialtrenneinrichtungen 24 zu blasen.

Die nach vorn und hinten gerichteten Komponenten des horizontalen Luftstroms verhindern, dass sich Staub und andere Verunreinigungen auf der Oberseite der Axialtrenneinrichtung 24 und ihren Antriebsverbindungen ansammeln. Vordere zum Ausstoß dienende Öffnungen 68 können in den Seitenwänden der tragenden Struktur 12 geformt sein. Diese Ausstoßöffnungen 68 können den vorderen Raum zwischen dem Deflektor 66 und den Öffnungen 68 entlüften. Durch diese Öffnungen 68 können Staub und Spreu aus dem Mähdrescher 10 ausgestoßen werden. Eine Ausstoßlücke 70 kann zwischen der Unterseite der Arbeitsplattform 54 und dem hinteren oberen Abschnitt der Axialtrenneinrichtungen 24 geformt sein. Diese Ausstoßlücke 70 kann benutzt werden, um den rückwärtigen Raum zwischen dem Deflektor 66 und dem hinteren Abschnitt der Axialtrenneinrichtungen 24 zu entlüften.

Die Spitze 72 des Deflektors 66 ist derart positioniert, dass sie einen Teil der aus der Kanaleinrichtung 56 austretenden Luft nach vorn und einen Teil davon nach hinten zwingt. Der Deflektor 66 ist derart dimensioniert und positioniert, dass er eine große Luftmenge nach vorn zwingt, weil die Ausstoßöffnungen 68 pneumatisch ineffizienter sind als die Ausstoßlücke 70, da der Luftstrom eine Wendung um 90 Grad machen muss, um durch die Seitenwände entkommen zu können. Weniger Luft ist an der Rückseite erforderlich, da die quer ausgerichtete Aussstoßlücke 70 besser mit dem Luftstrom über die Oberseite der Axialtrenneinrichtung 24 ausgerichtet ist.

Die dargestellte bekannte Kanaleinrichtung 56 umfasst eine Leitung 74 aus Kunststoff, die sich in einem Bogen zwischen ihrem Einlass 60 und Auslass 62 erstreckt. Die Krümmung der gebogenen Leitung 74 leitet den Luftstrom darin allmählich von einer horizontalen Flussrichtung in eine vertikale Flussrichtung um. Diese allmähliche Umleitung der Luft hilft, den Geschwindigkeitsverlust zu minimieren, der auftreten könnte, wenn der Luftstrom umgeleitet wird. Ein großer Teil des Luftstroms innerhalb der Leitung 74 befindet sich in der Nähe der gekrümmten Wand 78 der Leitung 74 am Punkt A. Wenn der Luftfluss in diesem Bereich durch die gekrümmte Wand 78 nach unten in einen vertikalen Fluss in der Nähe des Punktes B umgelenkt wird, kann die Luft anfangen, sich von der gekrümmten Wand 78 auszubreiten und sich in Richtung auf die gegenüberliegende Wand 80 zu bewegen. Wenn dem Luftstrom in diesem Bereich erlaubt wird, sich hinreichend auszubreiten, könnte er dahin tendieren, sich an dieser Stelle in der Leitung 74 in eine nach oben gerichtete Richtung zu verwirbeln, was den Luftfluss durch die Leitung 74 einschränkt und dadurch das Vermögen der Kanaleinrichtung 56 vermindert, Verunreinigungen von der Oberseite der Trenneinheiten 24 fortzublasen.

Um das Verwirbeln des Luftflusses nach oben abzuschwächen, weist die bekannte Leitung 74 einen verengten Abschnitt 76 in der Nähe der Stelle auf, an der der Luftstrom anfängt, sich vertikal zu bewegen. Das Vorhandensein des verengten Abschnitts 76 bewirkt jedoch eine Beschränkung, die die Luft an dieser Stelle im Wesentlichen daran hindert, sich nach oben zu verwirbeln. Außerdem erweitert sich der Auslass 62 der Leitung 74 vom verengten Abschnitt 76 nach außen, um eine trompetenartige Form zu bilden, wodurch er eine größere Querschnittsfläche als im verengten Abschnitt 76 bildet. Das ermöglicht dem Luftstrom, die Leitung 74 leicht mit wenig Widerstand zu verlassen, wodurch der Fluss durch die Leitung 74 verbessert wird.

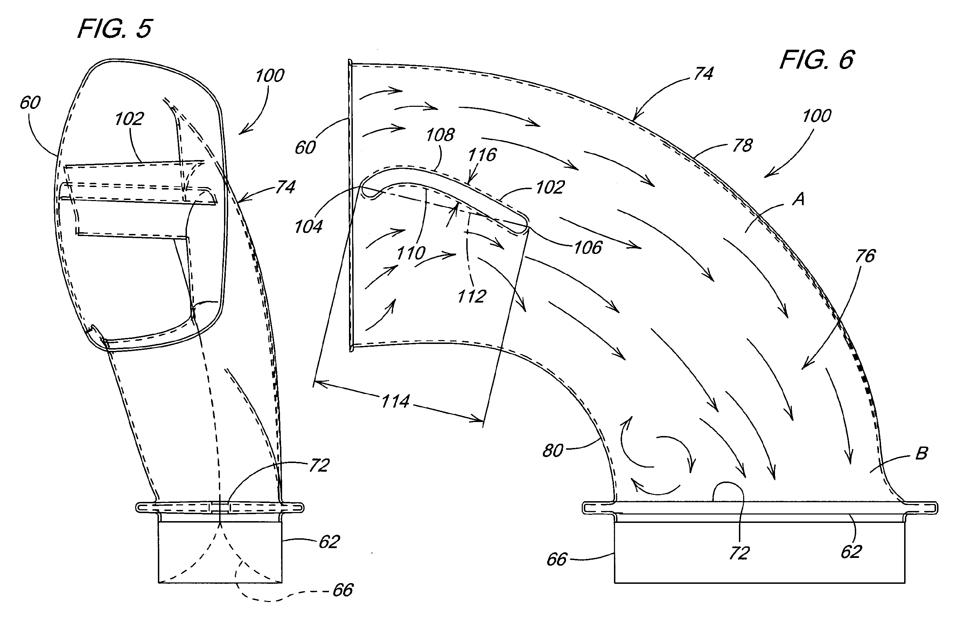

Die Figuren 5 und 6 illustrieren eine erfindungsgemäße Kanaleinrichtung 100. Eine Tragfläche 102 erstreckt sich quer über die Mitte der Leitung 74, um Luft in effizienterer Weise zum Auslass 62 zu richten. Die Tragfläche 102 verhindert auch, dass Luft zurück in den Einlass 60 rezirkuliert, wodurch der Luftfluss durch die Kanaleinrichtung 100 gesteigert wird. Die Tragfläche 102 umfasst eine vorlaufende Kante 104, eine nachlaufende Kante 106 stromab der vorlaufenden Kante 104, eine obere Oberfläche 108 und eine untere Oberfläche 110. Die Tragfläche 102 hat eine Sehne 112 mit einer Länge 114, die sich von der vorlaufenden Kante 104 zur nachlaufenden Kante 106 erstreckt. Die vorlaufende Kante 104 der Tragfläche 112 ist nahe dem Einlass 60 angeordnet, wobei sich die Sehne 112 unter einem Winkel von etwa 10° nach unten erstreckt.

Die Tragfläche 102 ist mit einer Länge 114 dargestellt, die wesentlich kleiner als die Länge der Kanaleinrichtung 100 ist, was zur Folge hat, dass ein wesentlicher Teil der Tragfläche 102 stromauf des verengten Abschnitts 76 liegt. Die Tragfläche 102 ist mit einer konstanten Dicke 116 dargestellt; sie könnte aber mit über ihre Länge und/oder Breite variierender Dicke hergestellt werden, um die Leistung weiter zu verbessern. Der Körper der Tragfläche 102 ist in der dargestellten Ausführungsform als einteilig geformtes Element der ober- und unterhalb der Tragfläche 102 offenen Leitung 74 gegossen oder gespritzt. Die Tragfläche 102 ist innen hohl, so dass sie ein hohles Rohr definiert, das sich quer über die Leitung 74 erstreckt und an beiden Seiten der Leitung 74 zur Umgebung geöffnet ist. Es ist anzumerken, dass der Ort der Tragfläche 102, ihre Orientierung und die Länge 114 der Sehne 112 zur Erreichung optimaler Leistung in unterschiedlichen Betriebsbedingungen verfeinert werden könnte. Obwohl in der dargestellten Ausführungsform nur eine Tragfläche 102 gezeigt wird, könnten außerdem zwei oder mehr Tragflächen 102 in der Leitung 74 platziert werden.

Beim Betrieb beschleunigt die Tragfläche 102 den Luftfluss an der oberen Oberfläche 108 und unterstützt die Leitung dieses Luftflusses nach unten zum Auslass 62 zu. Die Beschleunigung durch die Tragfläche 102 vergrößert die Geschwindigkeit des Luftflusses durch die Leitung 74, was das Gesamtvolumen des Luftflusses vergrößert. Die von der Tragfläche 102 bewirkte Verbesserung der Richtungsänderung des Luftflusses unterstützt die Vermeidung einer Reaktion des Luftflusses mit der gekrümmten Wand 78 und die Ausbreitung in die Leitung 74 am Punkt B, was eine Rezirkulation zurück in Richtung auf den Einlass 60 vermeidet. Der Gesamteffekt ist ein Ansteigen der Gesamtleistung gegenüber der in den Figuren 3 und 4 gezeigten Kanaleinrichtung 56.

## Patentansprüche

1. Mähdrescher (10) mit einer Trenneinrichtung (24) für Erntegut, einem Ventilator und einer Kanaleinrichtung (100), die angeordnet ist, einen vom Ventilator erzeugten Luftstrom zur Oberseite der Trenneinrichtung (24) zu leiten, um Verunreinigungen von ihr fortzublasen, wobei die Kanaleinrichtung (100) eine Leitung (74) umfasst, die einen Einlass (60), der eingerichtet ist, sich im Wesentlichen horizontal bewegende Luft vom Ventilator aufzunehmen, und einen Auslass (62) aufweist, aus dem Luft im Wesentlichen vertikal nach unten ausströmen kann, **dadurch gekennzeichnet, dass** sich innerhalb der Leitung (74) eine Tragfläche (102) quer erstreckt, die zur Verbesserung des Luftflusses nach unten zum Auslass (62) und zur Vermeidung einer Rückverwirbelung der Luft zum Einlass (60) hin angeordnet ist.

2. Mähdrescher (10) nach Anspruch 1, **dadurch gekennzeichnet, dass** die Länge (114) einer sich von der vorlaufenden Kante (104) zur nachlaufenden Kante (106) der Tragfläche (102) erstreckenden Sehne (112) wesentlich kleiner als die Länge der Leitung (74) ist.

3. Mähdrescher (10) nach Anspruch 1 oder 2, **dadurch gekennzeichnet, dass** die vorlaufende Kante (104) der Tragfläche (102) in der Nähe des Einlasses (60) angeordnet ist.

4. Mähdrescher (10) nach einem der Ansprüche 1 bis 3, **dadurch gekennzeichnet, dass** die Dicke (116) der Tragfläche (102) über ihre Länge im Wesentlichen konstant ist.

5. Mähdrescher (10) nach einem der Ansprüche 1 bis 4, **dadurch gekennzeichnet, dass** die Tragfläche (102) innen hohl ist, so dass sie ein hohles Rohr definiert, das sich quer über die Leitung (74) erstreckt und an beiden Seiten der Leitung (74) zur Umgebung geöffnet ist.

6. Mähdrescher (10) nach einem der Ansprüche 1 bis 5, **dadurch gekennzeichnet, dass** die Leitung (74) oberhalb des Auslasses (62) und in dessen Nähe einen verengten Abschnitt (76) aufweist, der eine kleinere Querschnittsfläche aufweist als der Einlass (60) und der Auslass (62).

7. Mähdrescher (10) nach Anspruch 6, **dadurch gekennzeichnet, dass** ein wesentlicher Teil der Tragfläche (102) sich stromauf des verengten Abschnitts (76) befindet.
